# EUROPÄISCHE PATENTSCHRIFT

(11) **EP 1 576 870 B1**
(45) Veröffentlichungstag und Bekanntmachung des Hinweises auf die Patenterteilung: **23.04.2008**
(21) Anmeldenummer: 05005710.8
(22) Anmeldetag: 16.03.2005
(51) Int. Cl.: A01D 43/08, A01D 41/127

(54) **Erntemaschine**
Harvester
Récolteuse

(30) Priorität: 18.03.2004 DE 102004013287
(43) Veröffentlichungstag der Anmeldung: 21.09.2005
(73) Patentinhaber: Maschinenfabrik Bernard Krone GmbH, 48480 Spelle (DE)
(72) Erfinder: Krone, Bernard, Dr.-Ing.E.h., 48480 Spelle (DE); Horstmann, Josef, Dr.-Ing., 49479 Ibbenbüren (DE)

(56) Entgegenhaltungen:
- EP-A- 1 419 688
- DE-A1- 4 218 235
- US-A1- 2003 019 196
- US-A1- 2004 006 957
- PATENT ABSTRACTS OF JAPAN Bd. 2002, Nr. 02, 2. April 2002 (2002-04-02) & JP 2001 292623 A (MITSUBISHI AGRICULT MACH CO LTD), 23. Oktober 2001 (2001-10-23)

## Beschreibung

Die Erfindung betrifft eine landwirtschaftliche Erntemaschine, insbesondere selbstfahrender Feldhäcksler mit einem als Vorsatzgerät ausgebildeten Erntegutaulhehmer, welcher in einer bodennahen Arbeits- und Betriebstellung durch von Antriebseinrichtungen der Erntemaschine angetriebenen Förder- und Führungselementen Erntegut aufnimmt und der Einzugs- und Verarbeitungseinrichtung der Erntemaschine zuführt.

Mit derartigen Vorsatzgeräten ausgestattete Feldhäcksler dienen in erster Linie zur Aufnahme und Verarbeitung von gernähtem Erntegut wie Anwelkgras, Grünfutter und dergleichen, welches vorzugsweise für eine wirtschaftlichere Aufnahme in Schwaden zusammengeführt ist. Erntemaschinen dieses Grundprinzips sind in diversen Ausführungs formen verschiedenster Hersteller bekannt. Allen gemeinsam sind jedoch verschiedene verschleiß- und lärmfördernde Nachteile, die insbesondere den Erntegutaufnehmer im Leerlauf betreffen. Für eine schnelle und saubere Erntegutaufnahme sind derartige Erntegutaufnehmer mit einer Aufnahmetrommel ausgestattet, welche wiederum mit mehreren radial angeordneten, mit Federzinken bestückten gesteuerten Zinkenleisten versehen ist. Des weiteren sind zusätzlich auf Grund der großen Arbeitsbreite der Erntegutaufnehmer noch rotierende Querförderelemente für die zentrale Zuführung des Erntegutes zur Einzugseinrichtung der Erntemaschine vorhanden.

Insbesondere bei den für die Maisernte sehr leistungsfähig ausgelegten Feldhäckslern muss ein Erntegutaufnehmer für Anwelkgras und Grünfutter ganz besonders leistungsfähig sein, um die Erntemaschine auslasten zu können. Das bedeutet besonders hohe Drehzahlen und Bewegunggeschwindigkeiten der beweglichen Förder- und Zuführelemente des Erntegutaulnehmers und damit verbunden erhöhter Verschleiß, erhöhte Laufgeräusche und erhöhte Unfallgefahr.Diese Nachteile treten insbesondere dann auf, wenn der Erntegutaufnehmer kein Erntegut aufnimmt, also ohne Last läuft Dieser Zustand tritt jeweils am Feldende am sogenannten Vorgewende auf, wenn der Erntegutaufnehmer von seiner bodennahen Arbeits- und Betriebsstellung in eine angehobene Stellung für die Wendefahrt der Erntemaschine überführt wird. Ebenso wie für den Erntegutaufnehmer treffen die genannten Nachteile auch für die angetriebene Bauteile der Zuführeinrichtung zu.

Aus der US 2004/0006957 A1 ist eine selbstfahrende Erntemaschine, insbesondere ein Mähdrescher bekannt geworden, welche über eine Einzugsvorrichtung Erntegut aufnehmen kann und dieses Erntegut daran anschließend einer Rearbeitungseinrichtung zufuhren kann. Weiterhin ist diese Erntemaschine mit einem Steuersystem ausgerüstet, welches in einem Lernmodus eine Sequenz von durch den Bediener ausgegebenen Steuerbefehlen aufzeichnen und speichern kann, um diese Steuerbefehle dann in einem Abspielmodus während einer weiteren Ernteüberfahrt erneut auszugeben und damit auszuführen.

Die JP 2001292623 beschreibt ebenfalls einen Mähdrescher, der über ein Vorsatzgerät in Form eines Schneidwerkes halmförmiges Erntegut abschneidet und es dann einer weiteren Bearbeitung zuführt. Beispielsweise am jeweiligen Ende einer Ernteüberfahrt bzw. zu Beginn einer Fahrt auf dem Vorgewende soll anhand einer Microcomputer-Vorrichtung die Geschwindigkeit von Einzugakellen des Vorsatzgerätes reduzierbar sein, so dass ein verlustfreier Einzug auch der zuletzt abgeschnittenen Pflanzenhalme erreichbar ist.

Aus der EP 1 419 688 A1 geht ein landwirtschaftliches Erntegerät zum Ernten von Mais oder dgl. stängelartigem Erntegut hervor, bei dem die Bewegungsrichtung der Antriebsbewegung der Einzugsorgane zum Abschneiden und Einziehen von Maisstängeln nach einer jeweiligen Ernteüberfahrt umkehrbar ausgebildet ist, damit dadurch eine Reinigungstätigkeit der Einzugsorgane eingeleitet wird. Nach Ablauf dieser Reinigungstätigkeit kann es vorgesehen seim die Antriebsbewegung der Einzugsorgane zwangsgesteuert in die während des Erntebetriebs vorherrschende Bewegungsrichtung umzukehren.

Ein Mangel der vorstehend beschriebenen Erntemaschinen aus dem Stand der Technik ist darin zu sehen, dass hierbei keine Vorkehrungen zu treffen sind, die eine optimale Bearbeitung von bereits eingezogenen Erntegut sicher slellen.

Der Erfindung liegt daher die Aufgabe zugrunde, eine Erntemaschine der eingangs genannten Art dahingehend zu verbessern, dass die Lebensdauer der Zufuhreinrichtung und des Erntegutaufnehmers erhöht und die Geräuschemissionen und die Unfallgefährdung durch den Erntegutaufnehmer minimiert werden.

Zur Lösung dieser Aufgabe zeichnet sich die Erntemaschine der eingangs genannten Art durch die Merkmale des Anspruchs 1 aus. Hinsichtlich weiterer vorteilhafter Merkmale wird auf die weiteren Ansprüche verwiesen.

Durch die erfindungsgemäße Steuerung der regelbaren Antriebe für Vorsatzgeräte und/oder Einzugseinrichtung der Erntemaschine wird erreicht, dass der Erntegutaufnehmer automatisch im mer dann, wenn der Erntegutaufnehmer von der bodennahen Arbeits- und Betriebsposition in eine zumindest teilweise angehobene Vorgewendestellung überführt wird, von seiner hohen Betriebsdrehzahl auf eine wesentlich reduzierte Leerlaufdrehzahl heruntergefahren wird. Gleiches gilt für den Einzugseinrichtungsantrieb, wobei dieser jedoch vorteilhaft gegenüber dem Erntegutaufnehmer zeitverzögert in seiner Geschwindigkeit reduziert wird, damit alles noch aufgenommene Erntegut mit der gleichen Einzugsgeschwindigkeit dem Häckselaggregat zugeführt und damit mit gleicher Schnittlänge gehäckselt wird.

Diese erhebliche Absenkung der Bewegungsgeschwindigkeiten der bewegten Bauteile des Erntegutaufnehmers und/oder der Einzugseinrichtung bewirken eine erhebliche Reduzierung von Verschleiß und Geräusch, denn insbesondere beim Erntegutaufnehmer sind Verschleiß und Geräuschentwicklung in dem Zustand des Leerlaufs, wenn der Erntegutaufnehmer ohne Erntegutaufnahme, also ohne Last läuft, besonders groß. Gegenüber einer kompletten Abschaltung der Antriebe werden außerdem noch weitere erfindungsgemäße Vorteile erreicht.

So werden unter anderem Schläge und Belastungsspitzen, die bei einer kompletten Aus- und Einschaltung in den Antriebssträngen entstehen, vermieden. Des weiteren sind für den Maschinenbediener Störungen oder eventuelle Schäden am Erntegutaufnehmer bei einem drehzahlreduzierten Leerlauf wesentlich besser sowohl optisch wie auch akustisch feststellbar als im Stillstand bzw. bei Betriebsdrehzahl.

Ein weiterer nicht unerheblicher Vorteil des erfindungsgemäß in der YorgewendesteIhiug im Leerlauf langsam laufenden Erntegutaufnehmers ist der Aspekt der Unfallverhütung. Drehende und sich bewegende Teile sind sofort von Jedermann offensichtlich als Gefährdung erkennbar.

Die Gefahr, die bei Absenkung eines abgeschalteten Erntegutaufnehmen von plötzlich mit hoher Geschwindigkeit unerwartet anlaufenden Maschinenteilen ausgeht, ist vorher jedoch nicht erkennbar.

Für die Ansteuerung der Drehzahlreduzierung der Antriebe für Vorsatzgerät und/oder Einzugseinrichtung einer erfindungsgemäßen Erntemaschine sind die unterschiedlichsten Lösungen denkbar. So könnte das Signal dazu gekoppelt mit der Anwahl des Aushubes des Vorsatzgerätes in die Vorgewendestellung erfolgen. Eine Zeitverzögerung wäre in diesem Fall gegenüber einer kompletten Abschaltung vorteilhaft nicht notwendig, weil der Erntegutaufnehmer auch im langsamen Leerlaufbetrieb das zuletzt aufgenommene Erntegut weiterfördert und so wirksam eine Verstopfung verhindert.

Eine Schaltung der Antriebsdrehzahl des Erntegutaufnehmers über Abfragesensoren der Aushubhöhe wäre ebenso denkbar wie eine mechanische Durchflussmengensteuenmg in Abhängigkeit der Aushubhöhe des Erntegutaufnehmers in der Zuleitung des Hydraulikmotors für den Vorsatzgeräteantrieb.

Die entsprechende Schaltung bzw. Regelung des Einzugseinrichtungsantriebs könnte dabei entweder gleichzeitig erfolgen, oder aber vorteilhaft mit einer variablen Zeitverzögerung zum Vorsatzgeräteantrieb, um wie bereits vorstehend beschrieben eine gleichbleibende Häcksellänge für das noch aufgenommene Resterntegut sicherzustellen.

Bei einer komfortablen elektronischen Steuerungslösung sind diverse variable Einstellungen bezüglich einer reduzierten Antriebsgeschwindigkeit des Erntegutaufnehmers und/oder der Einzugseinrichtung in der Vorgewendestellung, wie z. B. Verzögerungszeiten und tatsächliche Drehzahlen eventuell in Abhängigkeit zur Aushubhöhe, für einen automatischen Ablauf realisierbar.

Ein Ausführungsbeispiel einer erfindungsgemäßen Erntemaschine wird nun anhand einer Zeichnung gezeigt und beschrieben.

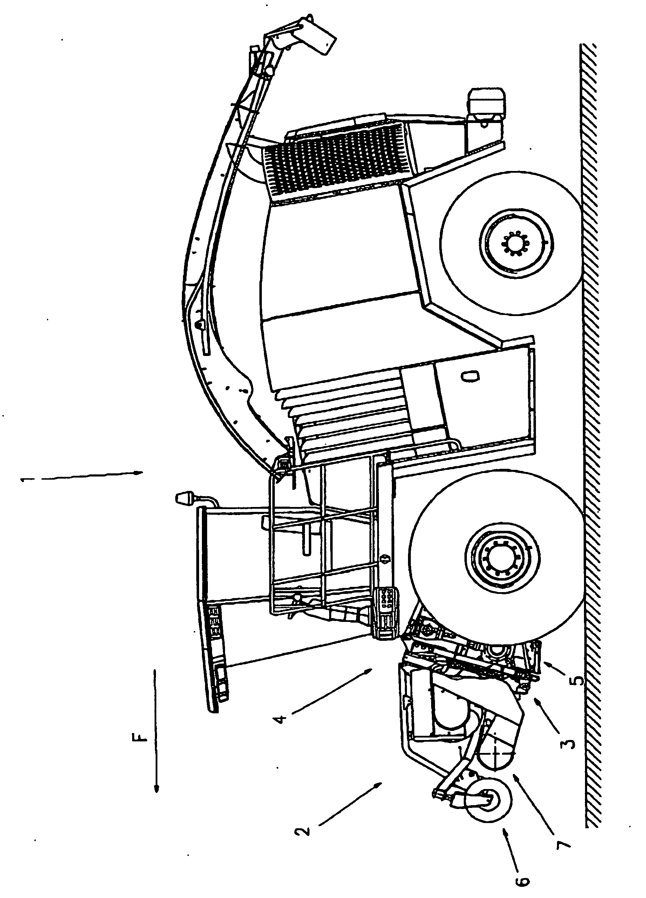

Die Zeichnung zeigt einen selbstfahrenden Feldhäcksler 1 bekannter Bauwiese mit einem in Fahrtrichtung F vor dem Feldhäcksler an diesem angekoppelten Erntegutaufnehmer 2 als Vorsatzgerät. Der Erntegutaufnehmer 2 ist dabei derart höhenbeweglich an die Hubeinrichtung 3 angekoppelt, dass er aufgenommenes Erntegut direkt der Einzugseinrichtung 4 des Feldhäckslers 1 zuführt. Die Antriebsgeschwindigkeit der Einzugseinrichtung 4 beeinflusst durch die Zufuhrgeschwindigkeit des Ernteguts zum Häckselaggregat die Häcksellänge des Ernteguts.

Der Einzugseinrichtungsantrieb und der Vorsatzgeräteantrieb 5 erfolgen dabei durch separate unabhängig voneinander regelbaren Hydraulikmotoren und nicht direkt drehzahlabhängig vom nicht dargestellten Antriebsmotor des Feldhäckslers 1. Ein derartiger Erntegutaufnehmer 2, welcher in der Zeichnung in der angehobenen Transportstellung dargestellt ist, wird in der Betriebs- und Arbeitsstellung in eine bodennahe Position abgesenkt und dabei von den zwei jeweils außen angebrachten Tast- und Stützrädem 6 auf einen einstellbaren Abstand der Aufnahmetrommel 7 zum Erdboden geführt. Um jeweils am Feldende bei der Wendefahrt Beschädigungen am Erntegutaufnehmer 2 und an der Grasnabe zu vermeiden, wird der Erntegutaufnehmer 2 bis zu einer sogenannten Vorgewendestellung zumindest so weit angehoben, dass während der Wendefahrt kein Bodenkontakt besteht. Die notwendige Mindestaushubhöhe des Erntegutaufnehmers 2 in der Vorgewendestellung kann je nach Bedingungen variieren und ist deshalb vorteilhaft einstellbar.

Derartige Erntemaschinen wie die dargestellte Kombination eines selbstfahrenden Feldhäckslers 1 mit einem Erntegutaufnehmer 2 als Vorsatzgerät, werden vorzugsweise in der Landwirtschaft zur Aufnahme und Verarbeitung von Anwelkgras, Grünfutter und dergleichen Erntegut eingesetzt.

## Patentansprüche

1. Landwirtschaftliche Erntemaschine, insbesondere selbstfahrender Feldhäcksler (1) mit einem als Vorsatzgerät ausgebildeten Erntegutaufnehmer (2), welcher in einer bodennahen Arbeits- und Betriebstellung durch von Antriebseinrichtungen der Erntemaschine angetriebene Förder- und Führungselemente Erntegut aufnimmt und einer Einzugs- und Verarbeitungseinrichtung (4) der Erntemaschine zuführt, wobei eine Steuereinrichtung für den Antrieb der Vorsatzgeräte vorgesehen ist und diese Steuereinrichtung derart auf den Antrieb der Vorsatzgeräte und den Antrieb der Einzugseinrichtung (4) einwirkt, dass mit der Überführung des Erntegutaufnehmers (2) aus einer bodennahen Arbeits- und Betriebstellung in eine zumindest teilweise ausgehobenen Vorgewendestellung automatisch durch das Herunterfahren von einer hohen Betriebsdrehzahl auf eine wesentlich reduzierte Leerlaufdrehzahl eine Reduzierung der Bewegungsgeschwindigkeiten der angetriebenen Bauteile des Erntegutaufnehmers (2) und der Einzugseinrichtung (4) eingeleitet wird, **dadurch gekennzeichnet, dass** die Bewegungsgeschwindigkeiten der angetriebenen Bauteile der Einzugseinrichtung (4) gegenüber den Bewegungsgeschwindigkeiten der angetriebenen Bauteile des Erntegutaufnehmers (2) zeitverzögert reduzierbar sind, damit alles noch aufgenommene Erntegut mit der gleichen Einzugsgeschwindigkeit der Verarbeitungseinrichtung zuführbar ist.

2. Erntemaschine nach Anspruch 1, **dadurch gekennzeichnet, dass** die auf den Vorsatzgeräteantrieb und/oder Einzugseinrichtungsantrieb einwirkenden Steuereinrichtung eine elektronische Steuerung umfassen.

3. Erntemaschine nach den Ansprüchen 1 und 2, **dadurch gekennzeichnet, dass** der Bediener der Erntemaschine über veränderliche Parameter die Steuerung des Vorsatzgeräteantriebs (5) und/oder des Einzugseinrichtungsantriebs beeinflussen kann.

4. Erntemaschine nach mindestens einem der vorstehenden Ansprüche, **dadurch gekennzeichnet, dass** mit dem Befehl zum Überführen des Erntegutaufnehmers (2) aus einer bodennahen Arbeits- und Betriebsstellung in eine zumindest teilweise ausgehobene Vorgewendestellung und umgekehrt, ein automatischer Ablauf weiterer Steuerungsfunktionen erfolgt.

5. Erntemaschine nach mindestens einem der vorstehenden Ansprüche, **dadurch gekennzeichnet, dass** die Steuerung des Vorsatzgeräteantriebs (5) über mechanische und/oder hydraulische und/oder pneumatische und/oder elektrische Schaltelemente erfolgt.

6. Erntemaschine nach mindestens einem der vorstehenden Ansprüche, **dadurch gekennzeichnet, dass** die Steuerung des Einzugseinrichtungsantriebs über mechanische und/oder hydraulische und/oder pneumatische und/oder elektrische Schaltelemente erfolgt.

7. Erntemaschine nach mindestens einem der vorstehenden Ansprüche, **dadurch gekennzeichnet, dass** die Antriebsgeschwindigkeit des Erntegutaufnehmers (2) und/oder des Einzugseinrichtungsantriebs in Abhängigkeit zur Aushubhöhe gesteuert wird.

8. Erntemaschine nach mindestens einem der vorstehenden Ansprüche, **dadurch gekennzeichnet, dass** die Antriebsgeschwindigkeit des Einzugseinrichtungsantriebs in Abhängigkeit zur Aushubhöhe des Erntegutaufnehmers (2) unabhängig zur Antriebsgeschwindigkeit des Erntegutaufnehmers (2) gesteuert wird.

9. Erntemaschine nach mindestens einem der vorstehenden Ansprüche, **dadurch gekennzeichnet, dass** bei Erreichen einer festgelegten Mindestaushubhöhe des Erntegutaufnehmers (2) die Vorsatzgeräteantriebsgeschwindigkeit wesentlich reduziert wird.

10. Erntemaschine nach mindestens einem der vorstehenden Ansprüche, **dadurch gekennzeichnet, dass** bei Aushub des Erntegutaufnehmers (2) auf eine festgelegte Aushubhöhe oberhalb einer festgelegen Mindestaushubhöhe der Vorgewendestellung der Vorsatzgeräteantrieb (5) abgeschaltet wird.

11. Erntemaschine nach mindestens einem der vorstehenden Ansprüche, **dadurch gekennzeichnet, dass** bei Aushub des Erntegutaufnehmers (2) auf eine festgelegte Aushubhöhe oberhalb einer festgelegen Mindestaushubhöhe der Vorgewendestellung der Einzugseinrichtungsantrieb variabel zeitverzögert abgeschaltet wird.

12. Erntemaschine nach mindestens einem der vorstehenden Ansprüche, **dadurch gekennzeichnet, dass** die Regelung der Vorsatzgeräteantriebsgeschwindigkeit in Abhängigkeit zur Fahrgeschwindigkeit und zur Menge des vom Erntegutaufnehmer (2) aufgenommenen Ernteguts erfolgt.

13. Erntemaschine nach mindestens einem der vorstehenden Ansprüche, **dadurch gekennzeichnet, dass** sämtliche für die Steuerung der Antriebsgeschwindigkeiten des Erntegutaufnehmers (2) und/oder der Einzugseinrichtung (4) notwendigen Parameter durch mechanische und/oder elektrische und/oder optische Sensoren erfasst und einer Steuerung zugeführt werden.

14. Erntemaschine nach mindestens einem der vorstehenden Ansprüche, **dadurch gekennzeichnet, dass** der Vorsatzgeräteantrieb (5) unabhängig vom Hauptantrieb der Erntemaschine stufenlos regelbar ist.

15. Erntemaschine nach mindestens einem der vorstehenden Ansprüche, **dadurch gekennzeichnet, dass** der Einzugseinrichtungsantrieb unabhängig vom Hauptantrieb der Erntemaschine stufenlos regelbar ist.

16. Erntemaschine nach einem der Ansprüche 1 bis 13, **dadurch gekennzeichnet, dass** der Vorsatzgeräteantrieb (5) zumindest in zwei Geschwindigkeitsstufen in Abhängigkeit zum Hauptantrieb der Erntemaschine schaltbar ist.

## Claims

1. Agricultural harvester, in particular a self-propelled forage harvester (1), having a pick-up device (2) for crop for harvesting in the form of a front-mounted attachment, which pick-up device (2) for crop for harvesting, in a working and operating position close to the ground, picks up crop for harvesting by means of feeding and guiding elements driven by drive means belonging to the harvester and feeds it to an intake and processing means (4) belonging to the harvester, a control means being provided for driving the front-mounted attachments and the said control means acting on the drive for front-mounted attachments and the drive of the intake means (4) in such a way that, on the pick-up device (2) for crop for harvesting being transferred from a working and operating position close to the ground to an at least partly raised position for turning, a reduction in the speeds of movement of the driven components of the pick-up device (2) for crop for harvesting and of the intakes means (4) is initiated by the downward transition from a high operating speed of revolution to a substantially reduced idling speed of revolution, **characterised in that** the speed of movement of the driven components of the intake means (4) relative to the speeds of movement of the driven components of the pick-up device (2) for crop for harvesting can be reduced with a time delay so that all the remaining crop for harvesting which has been picked up can be fed to the processing means at the same speed of intake.

2. Harvester according to claim 1, **characterised in that** the control means which act on the drive for front-mounted attachments and/or the drive of the intake means comprise an electronic control system.

3. Harvester according to claims 1 and 2, **characterised in that** the operator of the harvester can act on the control system of the drive (5) for front-mounted attachments and/or the drive of the intake means by means of variable parameters.

4. Harvester according to at least one of the foregoing claims, **characterised in that**, on the command for the pick-up device (2) for crop for harvesting to be transferred from a working and operating position close to the ground to an at least partly raised position for turning, and the reverse, an automatic sequence of other control functions takes place.

5. Harvester according to at least one of the foregoing claims, **characterised in that** the control of the drive (5) for front-mounted attachments is performed via mechanical and/or hydraulic and/or pneumatic and/or electrical switching elements.

6. Harvester according to at least one of the foregoing claims, **characterised in that** the control of the drive of the intake means is performed via mechanical and/or hydraulic and/or pneumatic and/or electrical switching elements.

7. Harvester according to at least one of the foregoing claims, **characterised in that** the driven speed of the pick-up device (2) for crop for harvesting and/or of the drive of the intake means is controlled as a function of the height of raise.

8. Harvester according to at least one of the foregoing claims, **characterised in that** the driven speed of the drive of the intake means is controlled as a function of the height to which the pick-up device (2) for crop for harvesting is raised, independently of the driven speed of the pick-up device (2) for crop for harvesting.

9. Harvester according to at least one of the foregoing claims, **characterised in that**, when a fixed minimum height of raise of the pick-up device (2) for crop for harvesting is reached, the speed of the drive for front-mounted attachments is substantially reduced.

10. Harvester according to at least one of the foregoing claims, **characterised in that**, when the pick-up device (2) for crop for harvesting is raised to a fixed height of raise above a fixed minimum height of raise for the turning position, the drive (5) for front-mounted attachments is switched off.

11. Harvester according to at least one of the foregoing claims, **characterised in that**, when the pick-up device (2) for crop for harvesting is raised to a fixed height of raise above a fixed minimum height of raise for the turning position, the drive of the intake means is switched off with a variable time delay.

12. Harvester according to at least one of the foregoing claims, **characterised in that** the control of the speed of the drive for front-mounted attachments is performed as a function of the speed of travel and of the quantity of crop for harvesting which is picked up by the pick--up device (2) for crop for harvesting.

13. Harvester according to at least one of the foregoing claims, **characterised in that** all the parameters required for the control of the driven speeds of the pick-up device (2) for crop for harvesting and/or of the intake means (4) are sensed by mechanical and/or electrical and/or optical sensors and are fed to a control system.

14. Harvester according to at least one of the foregoing claims, **characterised in that** the drive (5) for front-mounted attachments is steplessly controllable independently of the main drive of the harvester.

15. Harvester according to at least one of the foregoing claims, **characterised in that** the drive of the intake means is steplessly controllable independently of the main drive of the harvester.

16. Harvester according to one of claims 1 to 13, **characterised in that** the drive (5) for front-mounted attachments can be switched at least to two levels of speed as a function of the main drive of the harvester.

## Revendications

1. Récolteuse agricole, notamment ensileuse automotrice (1) comportant un ramasseur (2) en forme d'équipement installé à l'avant, et qui, en position de travail et de fonctionnement, proche du sol, reprend les produits de récolte par des éléments de transfert et de guidage entraînés par des installations d'entraînement de la récolteuse, et les fournit à une installation de reprise et de traitement (4) de la récolteuse,
une installation de commande prévue pour l'entraînement de l'équipement frontal agissant sur l'entraînement de l'équipement frontal et sur l'entraînement de l'installation de reprise (4) pour qu'avec le transfert du ramasseur (2) d'une position de travail et de fonctionnement proche du sol dans une position au moins partiellement relevée, de retournement, automatiquement une vitesse de rotation de fonctionnement élevée soit réduite à une vitesse de rotation de ralenti considérablement réduite, se traduisant par une réduction des vitesses de déplacement des composants entraînés du ramasseur (2) et de l'installation de reprise (4),
**caractérisée en ce que**
la réduction des vitesses de déplacement des composants entraînés de l'installation de reprise (4) par rapport aux vitesses de déplacement des composants entraînés du ramasseur (2) se fait de manière temporisée pour que tous les produits de récolte encore repris, soit fournis à l'installation de traitement à la même vitesse d'entrée.

2. Récolteuse selon la revendication 1,
**caractérisée en ce que**
l'installation de commande agissant sur l'entraînement de l'équipement avant et/ou sur l'entraînement de reprise comporte une commande électronique.

3. Récolteuse selon l'une des revendications 1 et 2,
**caractérisée en ce que**
l'opérateur de la récolteuse peut agir par des paramètres variables sur la commande de l'entraînement de l'équipement avant (5) et/ou de l'entraînement de l'installation de reprise.

4. Récolteuse selon au moins l'une des revendications précédentes,
**caractérisée en ce qu'**
avec l'ordre de faire passer le ramasseur (2) d'une position de travail et de fonctionnement proche du sol dans une position au moins partiellement relevée, de retournement, et inversement, avec une exécution automatique d'autres fonctions de commande.

5. Récolteuse selon au moins l'une des revendications précédentes,
**caractérisée en ce que**
l'entraînement de l'équipement avant (5) se fait par des éléments de commutation mécaniques et/ou hydrauliques et/ou pneumatiques et/ou électriques.

6. Récolteuse selon au moins l'une des revendications précédentes,
**caractérisée en ce que**
la commande de l'entraînement de l'installation de reprise se fait par des éléments de commutation mécaniques et/ou hydrauliques et/ou pneumatiques et/ou électriques.

7. Récolteuse selon au moins l'une des revendications précédentes,
**caractérisée en ce que**
la vitesse d'entraînement du ramasseur (2) et/ou de l'installation de reprise est commandée en fonction de la hauteur de dégagement.

8. Récolteuse selon au moins l'une des revendications précédentes,
**caractérisée en ce que**
la vitesse d'entraînement de l'installation de reprise est commandée en fonction de la hauteur de dégagement du ramasseur (2) indépendamment de la vitesse d'entraînement du ramasseur (2).

9. Récolteuse selon au moins l'une des revendications précédentes,
**caractérisée en ce que**
lorsqu'on atteint une hauteur de dégagement minimale, fixée, pour le ramasseur (2), la vitesse d'entraînement de l'équipement avant se réduit considérablement.

10. Récolteuse selon au moins l'une des revendications précédentes,
**caractérisée en ce qu'**
en cas de relèvement du ramasseur (2) à une hauteur de dégagement fixée, au-dessus d'une hauteur de dégagement minimale, fixée, de la position de retournement, l'entraînement de l'équipement avant (5) est coupé.

11. Récolteuse selon au moins l'une des revendications précédentes,
**caractérisée en ce qu'**
en cas de relèvement du ramasseur (2) à une hauteur de dégagement fixée, au-dessus d'une hauteur de dégagement minimale, fixée, de la position de retournement, l'entraînement du ramasseur est coupé avec une temporisation variable.

12. Récolteuse selon au moins l'une des revendications précédentes,
**caractérisée en ce que**
la régulation de la vitesse d'entraînement de l'équipement avant se fait en fonction de la vitesse de déplacement et de la quantité de produit reçue par le ramasseur (2).

13. Récolteuse selon au moins l'une des revendications précédentes,
**caractérisée en ce que**
tous les paramètres nécessaires à la commande des vitesses d'entraînement du ramasseur (2) et/ou de l'installation de reprise (4) sont saisis par des capteurs mécaniques et/ou électriques et/ou optiques et sont fournis à une commande.

14. Récolteuse selon au moins l'une des revendications précédentes,
**caractérisée en ce que**
l'entraînement de l'équipement avant (5) est réglable en continu, indépendamment de l'entraînement principal de la récolteuse.

15. Récolteuse selon au moins l'une des revendications précédentes,
**caractérisée en ce que**
l'entraînement de l'installation de reprise est réglable en continu indépendamment de l'entraînement principal de la récolteuse.

16. Récolteuse selon l'une des revendications 1 à 13,
**caractérisée en ce que**
l'entraînement de l'équipement avant (5) peut commuter au moins dans deux niveaux de vitesses en fonction de l'entraînement principal de la récolteuse.
